# EUROPÄISCHE PATENTSCHRIFT

(11) **EP 2 239 110 B1**
(45) Veröffentlichungstag und Bekanntmachung des Hinweises auf die Patenterteilung: **20.06.2012**
(21) Anmeldenummer: 10159179.0
(22) Anmeldetag: 06.04.2010
(51) Int. Cl.: B26D 7/00, B26D 7/32, B65G 15/34, B65G 15/42, B26D 7/22

(54) **Riemen für eine Aufschnittschneidemaschine**
Belt for meat slicer
Courroie pour trancheur

(30) Priorität: 03.04.2009 AT 5322009
(43) Veröffentlichungstag der Anmeldung: 13.10.2010
(73) Patentinhaber: Kuchler, Fritz, A-9020 Klagenfurt (AT)
(72) Erfinder: Kuchler, Fritz, 9020 Klagenfurt (AT)
(74) Vertreter: Müllner, Martin

(56) Entgegenhaltungen:
- DE-A1- 2 542 278
- DE-A1- 10 329 842
- US-A- 1 231 959
- US-A- 2 977 266

## Beschreibung

### TECHNISCHES GEBIET

Die Erfindung betrifft Riemen, die mit Spitzen besetzt sind, für eine Aufschnittschneidemaschine mit einem Ablegebereich für Schnittgutscheiben und mit einer Ablegeeinrichtung, die einen Rahmen mit Antriebsräder für die umlaufenden Riemen und einen Schläger zum Abwerfen der Schnittgutscheiben von den Spitzen in den Ablegebereich umfasst.

### STAND DER TECHNIK

Aus der US 1231959 A ist eine Aufschnittschneidemaschine der hier in Rede stehenden Bauart bekannt, die eine Ablegeeinrichtung mit umlaufenden Riemen aufweist, die mit Spitzen besetzt sind. Ein kammartig ausgebildeter Schläger hintergreift die Riemen und kann impulsartig Schwenkbewegungen in Richtung auf ein Ablegetablett ausführen. Es werden somit die abgeschnittenen Schnittgutscheiben von den Spitzen erfasst, über den Ablegebereich transportiert und dort mit Hilfe des Schlägers von den Spitzen abgezogen und auf das Ablegetablett geworfen. Nähere Information über die Beschaffenheit der Riemen oder der Spitzen können dieser Druckschrift nicht entnommen werden. Das Funktionsprinzip gemäß der US-Patentschrift hat bis heute Geltung. So sind heute Riemen für eine halb- oder vollautomatische Aufschnittschneidemaschinen im Einsatz, die vom Kreismesser abgeschnittene Schnittgutscheiben in normaler Richtung mit Hilfe der Ablegeeinrichtung normal zum Kreismesser und vom Kreismesser weg in den Ablegebereich transportieren. Um den Rahmen laufen bei den modernen Maschinen mehrere parallel zueinander und horizontal ausgerichtete, mit Spitzen besetzte endlose Ketten. Jeweils zwei zueinander beabstandete Antriebsräder spannen die endlosen Ketten.

Bei vielen dieser Ketten aus nicht rostendem Draht werden Drahtspitzen aus demselben Material auf Kettenglieder aufgeschweißt. Im Schnittgut enthaltene Säuren und Laugen bilden Salze, die die Schweißstellen angreifen, sodass sich die Spitzen im ungünstigsten Fall wieder von den Kettengliedern lösen, was zu Verletzungen führen kann.

Aus der WO 94/11279 A ist ein einstückiges Kettenglied mit Spitze bekannt, wobei das Kettenglied an einem Ende so aufgebogen ist, dass eine von der gespannten Kette im rechten Winkel abstehende Spitze entsteht.

Sämtliche Ausführungen mit Kettengliedern haben den Nachteil, dass sich die Glieder durch die Verwendung dehnen und mit zunehmender Dehnung die Laufgeräusche ansteigen. Weiters sind die etwa ca. 140 Kettenglieder pro Kette nach der Verwendung schwer zu reinigen, was gerade im Lebensmittelbereich besonders problematisch ist. Schließlich entsteht im Bereich der die Ketten spannenden Umlenkzahnräder im Betrieb ein Abrieb, der ebenfalls mit großem Aufwand gereinigt bzw. entfernt werden muss.

Unabhängig von Aufschnittschneidemaschinen sind aus der US 2977266 Förderbänder bei Transportanlagen bekannt. Diese Förderbänder umfassen zwei gleiche Lagen eines Textilgewebes, wobei die eine Lage U-förmig gebogene Drahtbügel mit jeweils einem als Spitze vorspringenden Schenkel enthält. Die zweite Lage ist unter die erstgenannte Lage geklebt. Als Decklage ist eine Gummischicht vorgesehen, durch welche die Spitzen hindurchtreten.

Die DE 2542278 A offenbart ein Nadel-Transportband für die Textilindustrie. Auf endlosen Riemen sind quer zur Laufrichtung Latten fixiert und in diese Latten sind Nadeln aus einem glasfaserverstärkten Kunststoff eingesetzt. Diese Transportbänder dienen beispielsweise zum Auflösen und/oder Schrägfördern von textilem Flockenmaterial.

### KURZE BESCHREIBUNG DER ERFINDUNG

Die Erfindung geht von den bekannten spitzenbesetzten Riemen für Aufschnittschneidemaschinen mit Ablegeeinrichtung aus und zielt darauf ab, die Nachteile und Gefahren der Kettenbänder mit angeschweißten oder einstückig aus den Kettengliedern herausgebogenen, zu Spitzen geformten Drahtstücken bei endlosen Riemen zu vermeiden.

Diese Aufgabe wird durch Riemen der eingangs genannten Art erfindungsgemäß dadurch gelöst, dass die Riemen eine Armierung, vorzugsweise eine Gewebeeinlage aufweisen und die Spitzen als Spikes den Querschnitt der Riemen einschließlich der Armierung durchsetzen und in die Riemen eingepresst sind.

Im Gegensatz zu den metallischen Ketten kann das Material der Riemen z.B. hinsichtlich seiner Elastizität und bezüglich eines Schichtenaufbaues in weiten Grenzen ausgewählt werden. Abrieb und Geräuschentwicklung werden hintangehalten. Die Spikes durchsetzen den Riemenquerschnitt vollständig und sind daher sehr gut am Riemen fixiert. Auch die Ausrichtung der Spikes wird dadurch gewährleistet. Die Armierung stellt sicher, dass der Riemen in der Querrichtung zur Laufrichtung eine hohe Stabilität aufweist, wodurch die Standfestigkeit der Spikes begünstigt und so ein seitliches Ausweichen der Spikes insbesondere während der Aufnahme der Schnittgutscheiben verhindert wird. Da besonders geschmeidige Zahnriemen benötigt werden, kommen bevorzugt textile Gewebeeinlagen zur Anwendung.

Es ist zweckmäßig, wenn die Riemen aus Polyurethan bestehen. Dieses Material erfüllt sämtliche Vorschriften im Hinblick auf Hygiene und verfügt über alle erforderlichen Zulassungen aus dem Lebensmittelbereich. Ein Riemen aus diesem Material benötigt auch nach längeren Betriebspausen beim Start des Schnittbetriebes keine zusätzliche Antriebskraft zur Wiedererlangung der üblichen Flexibilität. Bei den erfindungsgemäßen Riemen tritt der von früheren Zahnriemengenerationen bekannte Memory-Effekt nicht auf. Unter diesem Effekt versteht man die Tendenz des Riemens, während des Anlaufes die während der Ruhepause eingenommene Form beibehalten zu wollen. Eine textile Armierung unterstützt die vorteilhaften Eigenschaften eines Polyurethanriemens und optimiert das Verhalten im Zusammenwirken mit den Spikes.
Es hat sich als Vorteil erwiesen, wenn auf der dem Schnittgut zugewandten Seite Erhebungen im Riemen entsprechend einem Zahnriemen mit außen liegenden Zähnen ausgebildet und die Spikes im Bereich der Erhebungen angeordnet sind. Die Erhebungen dienen dazu, die Auflage- bzw. Berührungsfläche zwischen dem Riemen und dem Schnittgut zu verringern, um ein gegenseitiges Klebenbleiben zu verhindern. Die Verringerung der Berührungsfläche ist insbesondere bei stark fetthaltigem Schnittgut günstig. Die Erhebungen können entweder als Kegelstümpfe oder als Rippen, die quer zur Längsrichtung des Riemens verlaufen, ausgebildet sein. Diese Ausbildung als Zahnriemen mit nach außen weisenden Zähnen ist aus wirtschaftlichen Gründen vorteilhaft, weil für ursprünglich andere Anwendungen angefertigte Werkzeuge für die Herstellung der gegenständlichen Riemen verwendet werden können und zusätzliche Kosten für Werkzeuge oder Gussformen entfallen. Um eine möglichst exakte rechtwinkelige Ausrichtung der Spikes zum gerade gespannten Riemen sicher zu stellen, sind die Spikes am Riemen im Bereich der Erhebungen angeordnet. Es können weitere Rippen zwischen den Spikes vorgesehen sein, um die Berührungsfläche des flachen Riemenbereichs mit dem Schnittgut zu verkleinern. Auch kann in jede zweite Erhebung des Riemens ein Spike eingepresst werden.

Es ist ferner zweckmäßig, wenn die Spikes auf der dem Schnittgut abgewandten Seite des Riemens über eine Basis mit innerer Auflagefläche verfügen und daran ein halbkugelförmiger Kopf anschließt, der gemeinsam mit der Basis eine Nocke zur formschlüssigen Verbindung mit Ausnehmungen in den Antriebsrädern bildet. Auf diese Weise erhält der Riemen auf der dem Schnittgut abgewandten Seite Formschlusselemente zum Eingriff in einen Antrieb. Diese Ausführung gewährleistet einen schlupffreien Antrieb der in sich geschlossenen Riemen und garantiert damit den Gleichlauf paralleler Riemen. Ein sicheres Aufspießen des Schnittgutes wird erreicht, wenn die Spikes der parallel zueinander geführten Riemen auf Lücke stehen.

Weiters ist es zweckmäßig, wenn die Spikes auf der dem Schnittgut zugewandten Seite am Schaft zur Ausbildung einer äußeren Auflagefläche an der Oberfläche der Riemen über einen Kragen verfügen. Die Verbindung der Spikes mit dem Riemen wird dadurch verbessert. Es können auch keine Keime zwischen Riemen und Spikes eindringen.

Zur Herstellung bringt man in zweckmäßiger Weise zunächst in den Riemen den Querschnitt vollständig durchsetzende Bohrungen zur verbesserten Führung der Spikes während des Einpressens aus und presst danach die Spikes ein, bis beide Auflageflächen an den jeweiligen Oberflächen des Riemens anliegen und einrasten.

### KURZE BESCHREIBUNG DER ZEICHNUNGSFIGUREN

Ein Ausführungsbeispiel des Erfindungsgegenstandes ist in den beiliegenden Zeichnungen dargestellt.

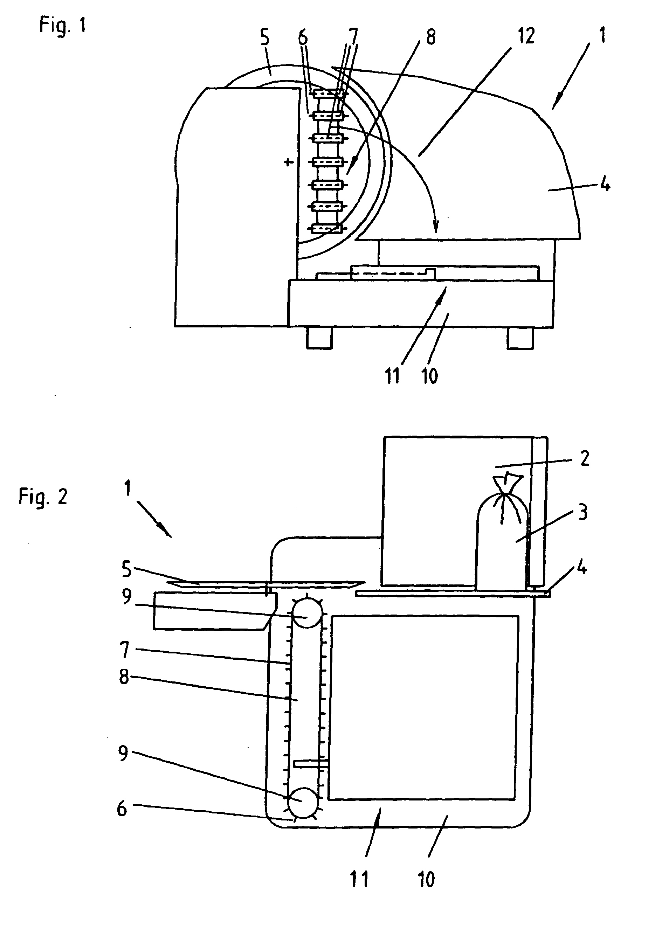

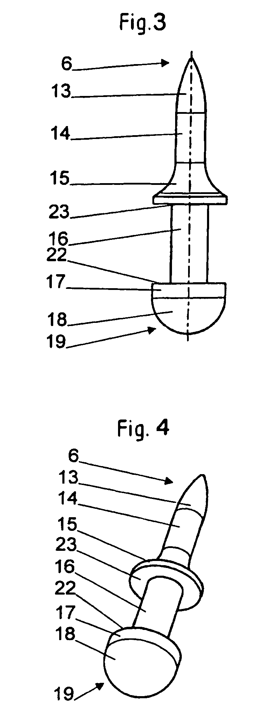

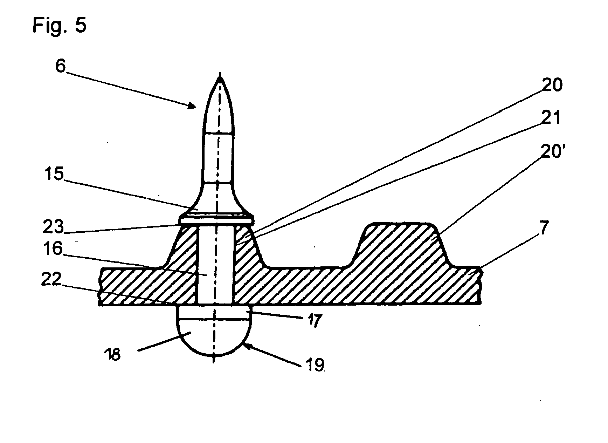

Fig. 1 zeigt eine Aufschnittschneidemaschine in Seitenansicht, Fig. 2 eine Draufsicht der Aufschnittschneidemaschine gemäß Fig. 1; Fig. 3 eine Seitenansicht auf einen Spike; Fig. 4 eine perspektivische Ansicht eines Spikes gemäß Fig. 3; und Fig. 5 einen Schnitt durch ein Stück eines erfindungsgemäßen Riemens mit einem eingepressten Spike.

### BESCHREIBUNG DER AUSFÜHRUNGSARTEN

Gemäß Fig. 1 und 2 umfasst eine Aufschnittschneidemaschine 1 einen Schnittgutwagen 2 zum Auflegen von Schnittgut 3. Der Schnittgutwagen 2 wird händisch oder durch einen reversierenden Elektroantrieb längs einer Anschlagplatte 4 gegen ein rotierendes Kreismesser 5 und zurück verfahren. Die Schnittstärke wird durch Vergrößern oder Verkleinern des Abstands zwischen dem Kreismesser 5 und der Anschlagplatte 4 eingestellt. Jede abgeschnittene Schnittgutscheibe gelangt auf Spikes 6 von Riemen 7 eines Rahmens 8. Der Rahmen 8 weist zu beiden Seiten jeweils mehrere (im Ausführungsbeispiel sieben) Riemen auf, die von axial übereinander angeordneten Antriebsrädern 9 angetrieben sind, wobei die Riemen 7 waagrecht jeweils auf unterschiedlicher Höhe über einem Ablagetablett 11 auf einander gegenüberliegenden Antriebsrädern 9 umlaufen. Eine im Sockelgehäuse 10 untergebrachte, nicht dargestellte, programmierbare elektronische Steuerung gibt die Förderweglänge jeder Schnittgutscheibe auf den Riemen 7 des Rahmens 8 vor und steuert auch einen ebenfalls nicht dargestellten Antriebsmotor für eine Vorschubeinrichtung eines Ablegetabletts 11 schrittweise an, sodass die von einem die Riemen 7 hintergreifenden Schläger in Richtung des Pfeils 12 abgeworfenen Schnittgutscheiben einen in zwei Achsrichtungen überlappenden Aufschnitt bilden können. Ein einfaches Stapeln der Schnittgutscheiben übereinander ist ebenfalls möglich.

Gemäß Fig. 3 besteht ein Spike 6 aus folgenden Abschnitten:

An eine Spitze 13 schließen ein Schaft 14, ein Kragen 15, ein Halsteil 16 und eine Basis 17 und ein halbkugelförmiger Kopf 18 an. Die Basis 17 und der Kopf 18 bilden gemeinsam eine Nocke 19. Die Spikes 6 sind aus Edelstahl gefertigte Drehteile, haben etwa eine Gesamtlänge von 8 mm und einen maximalen Durchmesser von etwa 2 mm. Herstellungsversuche mit geschmiedeten Metalldornen lieferten keine zufrieden stellenden Ergebnisse, weil die notwendige Präzision nicht erreicht werden konnte.

In Fig. 5 ist ein Schnitt durch ein Stück eines Riemens 7 mit einem eingepressten Spike 6 dargestellt. Der Halsteil 16 des Spikes 6 durchsetzt den Riemen 7 im Bereich einer Erhebung bzw. eines Zahnes 20, welcher als Stabilisierungselement des eingepressten Spikes 6 dient.

Damit sich der Spike 6 während des Einpressens in den Riemen 7 nicht verläuft, wird zuvor eine Bohrung 21 durch die Mitte des Zahnes 20 und den Riemen 7 gebohrt. Der Halsteil 16 weist ungefähr einen Durchmesser von etwa 1 mm auf und die Bohrung 21 einen Durchmesser von etwa 0,6 mm. Die Spikes 6 haben über eine innere Auflagefläche 22 und eine äußere Auflagefläche 23 Kontakt zu den beiden Breitseiten des Riemens 7, wobei sämtliche Kontaktflächen plan sind.

Da der Riemen 7 aus einem elastischem Material, insbesondere Polyurethan, besteht, werden die Bohrungen 21 beim Einbringen der Spikes 6 derart reversibel gedehnt, dass das elastische Material nach dem Einbringen der Spikes 6 wieder vollflächig auf den Spikes 6 aufliegt und die Längsachse der Spikes 6 mit dem gespannten Riemen 7 einen Winkel von etwa 90° einnimmt.

Zwischen zwei mit Spikes 6 besetzten Zähnen 20 befindet sich entlang des Riemens 7 ein Zahn 20' ohne eingepressten Spike 6. Der Zahn 20' hat die Aufgabe, die entstehende Kontaktfläche zwischen dem Schnittgut und dem Riemen 7 zu verkleinern, um das Haftvermögen des Schnittgutes an den Riemen 7 auf ein Minimum zu reduzieren.

Bei dem Riemen 7 handelt es sich um einen Zahnriemen, wobei die Zähne 20, 20' bzw. Rippen in der Querrichtung des Riemens 7 in die Richtung der Spitze 13 des Spikes 6 weisen und nicht die übliche Antriebsfunktion ausüben.

## Patentansprüche

1. Riemen, die mit Spitzen besetzt sind, für eine Aufschnittschneidemaschine mit einem Ablegebereich für Schnittgutscheiben und mit einer Ablegeeinrichtung, die einen Rahmen mit Antriebsrädern für die umlaufenden Riemen und einen Schläger zum Abwerfen der Schnittgutscheiben von den Spitzen in den Ablegebereich umfasst, **dadurch gekennzeichnet, dass** die Riemen (7) eine Armierung, vorzugsweise eine Gewebeeinlage aufweisen und die Spitzen als Spikes (6) den Querschnitt der Riemen (7) einschließlich der Armierung durchsetzen und in die Riemen (7) eingepresst sind.

2. Riemen, nach Anspruch 1, **dadurch gekennzeichnet, dass** diese aus Polyurethan bestehen.

3. Riemen nach den Ansprüchen 1 oder 2, **dadurch gekennzeichnet, dass** auf der dem Schnittgut zugewandten Seite Erhebungen entsprechend einem Zahnriemen mit außen liegenden Zähnen ausgebildet und die Spikes (6) in den Bereichen der Erhebungen angeordnet sind.

4. Riemen nach einem der Ansprüche 1 bis 3, **dadurch gekennzeichnet, dass** die Spikes (6) auf der dem Schnittgut abgewandten Seite des Riemens (7) über eine Basis (17) mit innerer Auflagefläche (22) verfügen und daran ein halbkugelförmiger Kopf (18) anschließt, der gemeinsam mit der Basis (17) eine Nocke (19) zur formschlüssigen Verbindung mit Ausnehmungen in den Antriebsrädern (9) bildet.

5. Riemen nach einem der Ansprüche 1 bis 4, **dadurch gekennzeichnet, dass** die Spikes (6) an der dem Schnittgut zugewandten Seite am Schaft (14) zur Ausbildung einer äußeren Auflagefläche (23) an der Oberfläche der Riemen (7) über einen Kragen (15) verfügen.

6. Riemen nach den Ansprüchen 4 oder 5, **dadurch gekennzeichnet, dass** die inneren und die äußeren Auflageflächen (22, 23) der Spikes (6) auf den Riemen (7) als plane Flächen, insbesondere Ringflächen, ausgebildet sind.

## Claims

1. Belts, needled with points, for a slicer for cold cuts having a deposit region for slices of sliced product and having a depositing device which comprises a frame with driving wheels for the circulating belts and a beater for releasing the slices of sliced product from the points into the deposit region, **characterised in that** the belts (7) have a reinforcement, preferably a woven-fabric insert, and the points as spikes (6) pass through the cross-section of the belts (7) including the reinforcement and are pressed into the belts (7).

2. Belts according to claim 1, **characterised in that** they consist of polyurethane.

3. Belts according to claims 1 or 2, **characterised in that** formed on the side facing the sliced product there are elevations in accordance with a toothed belt with external teeth, and the spikes (6) are arranged in the regions of the elevations.

4. Belts according to one of claims 1 to 3, **characterised in that** on the side of the belt (7) remote from the sliced product the spikes (6) are provided with a base (17) with an inner supporting surface (22) and following on from this there is a hemispherical head (18) which together with the base (17) forms a cam (19) for form-locking connection with recesses in the driving wheels (9).

5. Belts according to one of claims 1 to 4, **characterised in that** on the side facing the sliced product the spikes (6) are provided with a collar (15) on the shaft (14) in order to form an outer supporting surface (23) on the surface of the belts (7).

6. Belts according to claims 4 or 5, **characterised in that** the inner and the outer supporting surfaces (22, 23) of the spikes (6) on the belts (7) are formed as planar surfaces, in particular annular surfaces.

## Revendications

1. Courroies pourvues de pointes, pour une trancheuse de cuisine avec une zone de dépôt destinée aux tranches réalisées et avec un dispositif de dépôt comprenant un cadre avec des roues entraînant lesdites courroies en rotation et un batteur destiné à détacher lesdites tranches réalisées desdites pointes afin qu'elles se retrouvent dans ladite zone de dépôt, **caractérisées en ce que** les courroies (7) comportent une armature, de préférence une nappe textile, et lesdites pointes sont ancrés sous forme de crampons (6) qui traversent l'intégralité des courroies (7), y compris ladite armature, et sont qui poussées sous pression dans les courroies (7).

2. Courroies selon la revendication 1, **caractérisées en ce qu'**elles sont constituées de polyuréthane.

3. Courroies selon les revendications 1 ou 2, **caractérisées en ce que**, sur le côté faisant face à l'objet à trancher, des parties surélevées sont formées à l'instar d'une courroie dentée dont les dents sont situées à l'extérieur, et les crampons (6) sont disposés au niveau desdites parties surélevées.

4. Courroies selon l'une des revendications 1 à 3, **caractérisées en ce que**, sur le côté de la courroie (7) se trouvant à l'opposé de l'objet à trancher, les crampons (6) disposent d'une base (17) avec une surface d'appui intérieure (22) et, dans son prolongement, d'une tête en forme d'hémisphère (18) laquelle forme, ensemble avec la base (17), un bossage (19) destiné réaliser, par complémentarité de forme, la liaison avec des évidements dans les roues d'entraînement (9).

5. Courroies selon l'une des revendications 1 à 4, **caractérisées en ce que**, sur le côté faisant face à l'objet à trancher, les crampons (6) disposent sur leur tige (14) d'un collier (15) destiné à former une surface d'appui extérieure (23) sur la surface des courroies (7).

6. Courroies selon les revendications 4 ou 5, **caractérisées en ce que** les surfaces d'appui intérieures et extérieures (22, 23) des crampons (6) sur les courroies (7) sont réalisées sous forme de surfaces planes, notamment de surfaces annulaires.
